# EUROPEAN PATENT APPLICATION

(11) **EP 4 807 155 A1**
(43) Date of publication of application: **16.09.2026**
(21) Application number: 26164416.5
(22) Date of filing: 12.03.2026
(51) Int. Cl.: F01N 3/10

(54) **SADDLE-RIDE VEHICLE**

(30) Priority: 14.03.2025 JP 2025041352
(71) Applicant: HONDA MOTOR CO., LTD., Tokyo 105-8404 (JP)
(72) Inventor: YAMAMOTO, Kyotaro, Minato-ku, Tokyo, 105-8404 (JP)
(74) Representative: Dehns

(57) **Abstract**

A saddle-ride vehicle (10) that enables an improvement in output performance and compact arrangement of an exhaust pipe is provided.

The saddle-ride vehicle includes a pair of exhaust pipes (56, 57) extending downward from an engine (12). One of the pair of exhaust pipes (56, 57) on the left and right sides is a first exhaust pipe (56), and the other is a second exhaust pipe (57). The first exhaust pipe (56) includes an upstream bent portion (56b) that bends toward the second exhaust pipe (57). The saddle-ride vehicle (10) also includes a merging portion (65) where the upstream bent portion (56b) and the second exhaust pipe (57) merge, on the other side of the left and right sides, and includes a third exhaust pipe (59) extending from the merging portion (65). A downstream portion of the upstream bent portion (56b) merges with the second exhaust pipe (57) in a state of being aligned with the second exhaust pipe (57) in a vehicle width direction and extending downward along the second exhaust pipe (57). The merging portion (65) includes a downstream bent portion (58) that bends toward one of the left and right sides from a connection point between the upstream bent portion (56b) and the second exhaust pipe (57), a first communication portion (66) that allows the upstream bent portion (56b) and the second exhaust pipe (57) to communicate with each other upstream of the downstream bent portion (58), and a second communication portion (67) that allows the upstream bent portion (56b) and the third exhaust pipe (59) to communicate with each other downstream of the downstream bent portion (58), and has a smaller diameter than those of the downstream bent portion (58) and the second exhaust pipe (57).

## Description

### BACKGROUND

### Technical Field

The present invention relates to a saddle-ride vehicle.

### Related Art

There is known a saddle-ride vehicle that includes a pair of exhaust pipes extending downward from an engine, in which one of the left and right pair of exhaust pipes, that is, a first exhaust pipe, has an upstream bent portion that bends toward the other of the left and right pair of exhaust pipes, that is, a second exhaust pipe. The saddle-ride vehicle also includes a merging portion where the upstream bent portion and the second exhaust pipe merge, on the other side of the left and right sides, and a third exhaust pipe extends from the merging portion (see, for example, JP 2022-178770 A).

### SUMMARY

However, in the conventional configuration, the exhaust resistance of one of the left and right exhaust pipes having the upstream bent portion is larger than the exhaust resistance of the other of the left and right exhaust pipes having no upstream bent portion, which is disadvantageous in improving the output performance. In addition, the conventional configuration is a configuration in which the exhaust pipe extends to the lower side of the engine, and if the exhaust pipe is to be accommodated within the vertical width of the engine, the bending angle of the exhaust pipe becomes larger, which causes an increase in the exhaust resistance.

The present invention has been made in view of the above circumstances, and an object thereof is to provide a saddle-ride vehicle capable of improving output performance and realizing compact arrangement of an exhaust pipe.

In order to achieve the object, a saddle-ride vehicle includes: a pair of exhaust pipes extending downward from an engine, the pair of exhaust pipes including a first exhaust pipe on one of left and right sides and a second exhaust pipe on the other of the left and right sides, the first exhaust pipe including an upstream bent portion that bends toward the second exhaust pipe; a merging portion in which the upstream bent portion and the second exhaust pipe merge, on the other of the left and right sides; and a third exhaust pipe extending from the merging portion. A downstream portion of the upstream bent portion merges with the second exhaust pipe in a state of being aligned with the second exhaust pipe in a vehicle width direction and extending downward along the second exhaust pipe. The merging portion includes: a downstream bent portion that bends toward one of the left and right sides from a connection point between the upstream bent portion and the second exhaust pipe; a first communication portion that allows the upstream bent portion and the second exhaust pipe to communicate with each other upstream of the downstream bent portion; and a second communication portion that allows the upstream bent portion and the third exhaust pipe to communicate with each other downstream of the downstream bent portion, and has a smaller diameter than the diameters of the downstream bent portion and the second exhaust pipe.

According to the present invention, since an exhaust pipe is bent, the exhaust pipe in front of the engine can be made to have an appropriate length while the entire exhaust pipe is compactly accommodated within the vertical width, and the output can be improved. Moreover, when the exhaust flows from the first exhaust pipe or the second exhaust pipe to the merging exhaust pipe, the diameter is expanded by the first communication portion, so that the exhaust due to bending of the exhaust pipe is allowed to flow to the first communication portion and the second communication portion, and the exhaust resistance accompanying the merging of the first exhaust pipe and the second exhaust pipe can be reduced.

### BRIEF DESCRIPTION OF DRAWINGS

Embodiments of the invention will now be described, by way of example only, with reference to the accompanying drawings, wherein:
FIG. 1 is a side view of a saddle-ride vehicle according to an embodiment of the present invention;
FIG. 2 is a front view of the saddle-ride vehicle;
FIG. 3 illustrates a part of an exhaust device as viewed from below;
FIG. 4 illustrates a part of the exhaust device as viewed from the left;
FIG. 5 illustrates a part of the exhaust device as viewed from above;
FIG. 6 illustrates a cross section of a merging portion as viewed from the front;
FIG. 7 is a cross-sectional view taken along line VII-VII in FIG. 6; and
FIG. 8 is a diagram illustrating an exhaust device and a cover.

### DETAILED DESCRIPTION

Hereinafter, embodiments of the present invention will be described with reference to the drawings. Note that, in the description, directions such as front, rear, left, right, up, and down are identical to directions with respect to a vehicle body, unless otherwise specified. In the drawings, reference sign FR denotes the front side of the vehicle body, reference sign UP denotes the upper side of the vehicle body, and reference sign LH denotes the left side of the vehicle body.

### [Embodiment]

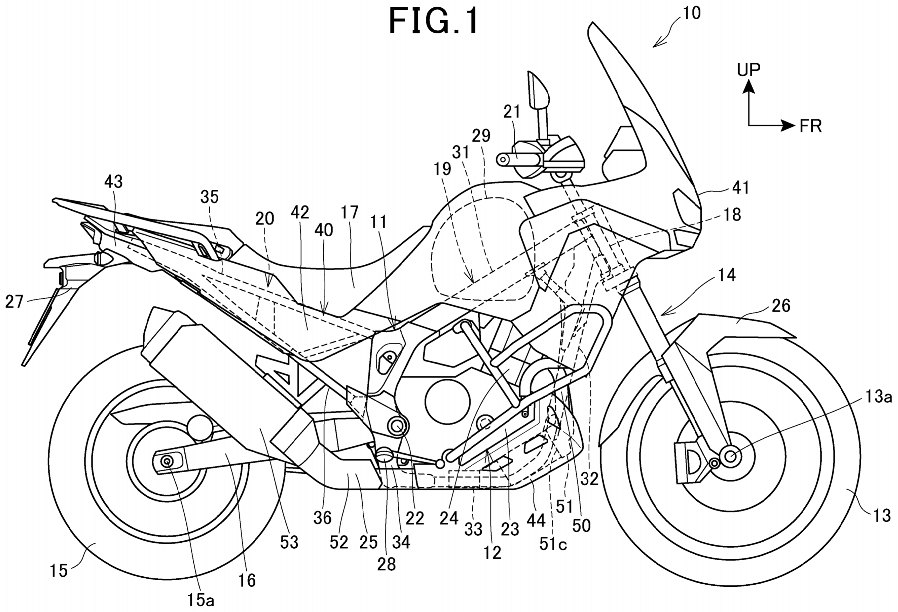

FIG. 1 is a side view of a saddle-ride vehicle 10 according to an embodiment of the present invention.

The saddle-ride vehicle 10 is a vehicle including a vehicle body frame 11, a power unit 12 supported by the vehicle body frame 11, a front fork 14 that supports a front wheel 13 so as to be steerable, a swing arm 16 that supports a rear wheel 15, and a seat 17 for a rider.

The saddle-ride vehicle 10 is a vehicle on which a rider sits so as to straddle the seat 17. The seat 17 is provided above a rear portion of the vehicle body frame 11.

The vehicle body frame 11 includes a head pipe 18 provided at a front end portion of the vehicle body frame 11, a front frame 19 located behind the head pipe 18, and a rear frame 20 located behind the front frame 19. A front end portion of the front frame 19 is connected to the head pipe 18.

The seat 17 is supported by the rear frame 20.

The front fork 14 is supported by the head pipe 18 so as to be steerable to the right and left. The front wheel 13 is supported by an axle 13a provided at a lower end portion of the front fork 14. A handlebar 21 for steering gripped by the rider is attached to an upper end portion of the front fork 14.

The swing arm 16 is supported by a pivot shaft 22 supported by the vehicle body frame 11. The pivot shaft 22 is a shaft extending horizontally in a vehicle width direction. The pivot shaft 22 is inserted through a front end portion of the swing arm 16. The swing arm 16 swings up and down with the pivot shaft 22 as the center.

The rear wheel 15 is supported by an axle 15a provided at a rear end portion of the swing arm 16.

The power unit 12 is disposed between the front wheel 13 and the rear wheel 15, and is supported by the vehicle body frame 11.

The power unit 12 is an internal combustion engine. The power unit 12 includes a crankcase 23 and a cylinder unit 24 that accommodates a reciprocating piston. An exhaust device 25 is connected to an exhaust port of the cylinder unit 24.

An output of the power unit 12 is transmitted to the rear wheel 15 by a driving force transmission member that connects the power unit 12 and the rear wheel 15.

The saddle-ride vehicle 10 includes a front fender 26 that covers the front wheel 13 from above, a rear fender 27 that covers the rear wheel 15 from above, steps 28 on which the rider places his/her feet, and a fuel tank 29 that stores fuel used by the power unit 12.

The front fender 26 is attached to the front fork 14. The rear fender 27 and the steps 28 are provided below the seat 17. The fuel tank 29 is supported by the vehicle body frame 11.

In the present embodiment, a front frame 19 includes a pair of left and right main frames 31 extending rearward and downward from the head pipe 18, a down frame 32 extending downward from a position below the front end of the main frame 31 in the head pipe 18, and a pair of left and right lower frames 33 extending rearward from the downstream of the down frame 32.

The rear frame 20 includes a pair of left and right pivot frames 34 extending downward from the rear end of the main frame 31, a pair of left and right seat frames 35 extending rearward from upper end portions of the respective pivot frames 34, and a pair of left and right rear sub-frames 36 extending rearward and upward from the middle in the longitudinal direction of the pivot frames 34 and connected to the middle in the longitudinal direction of the seat frames 35.

The saddle-ride vehicle 10 includes a vehicle body cover 40 that covers the vehicle body such as the vehicle body frame 11 and the power unit 12. The vehicle body cover 40 includes a front cover 41 that covers the periphery of the head pipe 18 from the front and the side, a rear side cover 42 that covers the seat frame 35 below the seat 17, a tail cover 43 that covers the rear portion of the seat 17 from above, and an under cover (cover) 44 that covers the lower portion of the exhaust device 25 from the front together with the power unit 12.

An engine 12 is disposed between the main frame 31 and the lower frame 33 and between the down frame 32 and the pivot frame 34 in a side view of the vehicle, and is supported by the vehicle body frame 11.

The power unit 12 is a parallel two-cylinder engine in which the cylinder unit 24 is erected on a front upper portion of the crankcase 23 and two cylinders are arranged in parallel in the cylinder unit 24. Hereinafter, the power unit 12 is referred to as the engine 12. An upstream exhaust pipe 50 is connected to a front portion of the cylinder unit 24.

The upstream exhaust pipe 50 extends while curving forward and downward from the cylinder unit 24 in a right side view of the saddle-ride vehicle 10, and then extends backward and downward along the down frame 32. A catalytic converter 51 that purifies exhaust gas is connected to the downstream end of the upstream exhaust pipe 50.

The catalytic converter 51 linearly extends backward and downward along the lower frame 33. A downstream exhaust pipe 52 is connected to the downstream end of the catalytic converter 51.

The downstream exhaust pipe 52 extends rearward along the lower frame 33. A muffler 53 extending rearward and upward is connected to the downstream end of the downstream exhaust pipe 52.

The exhaust device 25 includes the upstream exhaust pipe 50, the catalytic converter 51, the downstream exhaust pipe 52, and the muffler 53. The exhaust gas from the engine 12 flows into the exhaust device 25, and the exhaust gas is purified by a catalyst 51c provided in the catalytic converter 51 and discharged to the outside of the exhaust device 25. In addition, exhaust sound is reduced by the muffler 53.

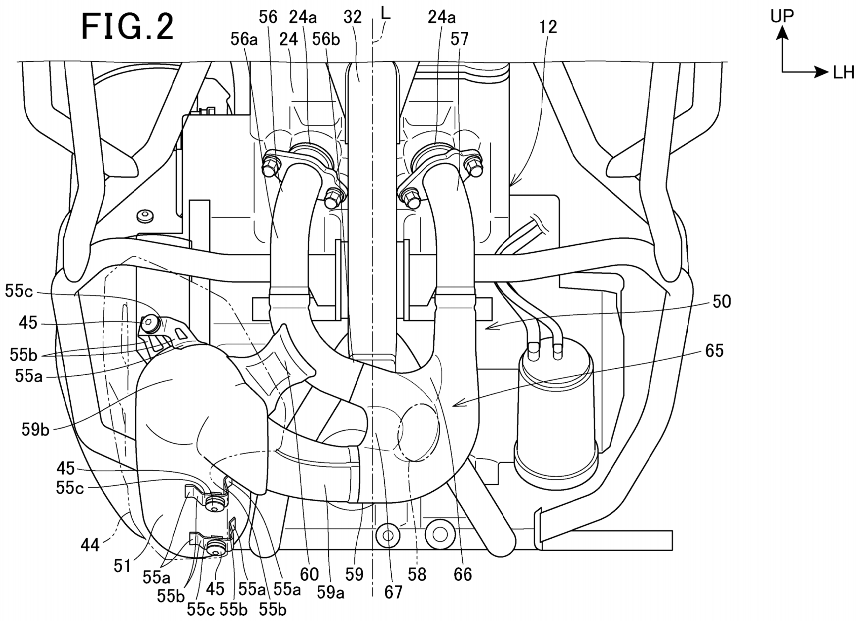

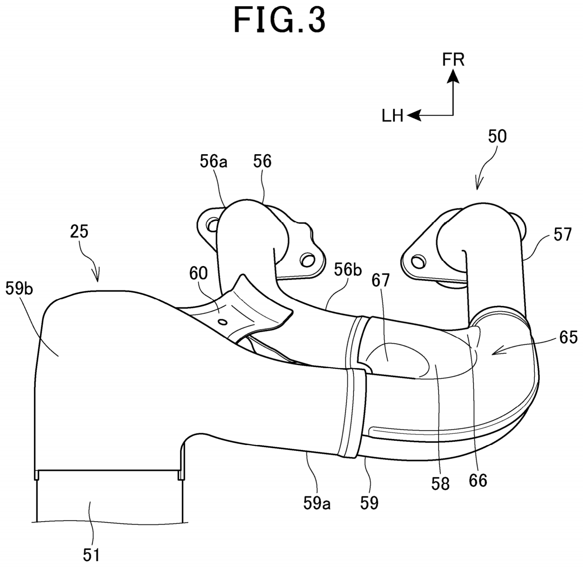

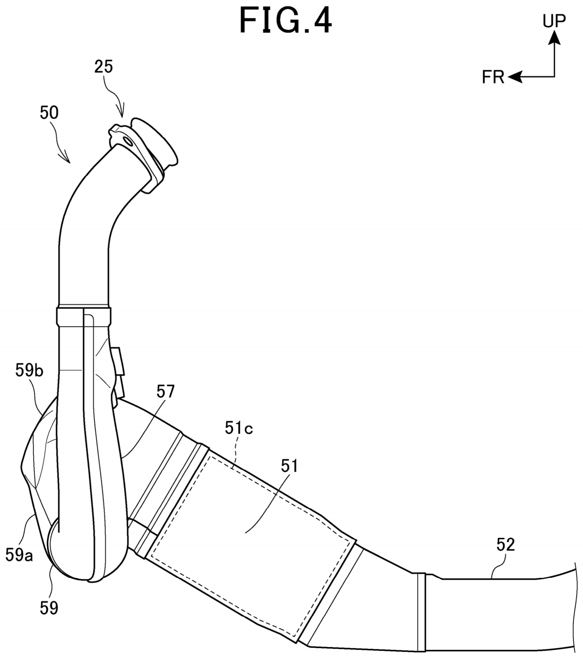

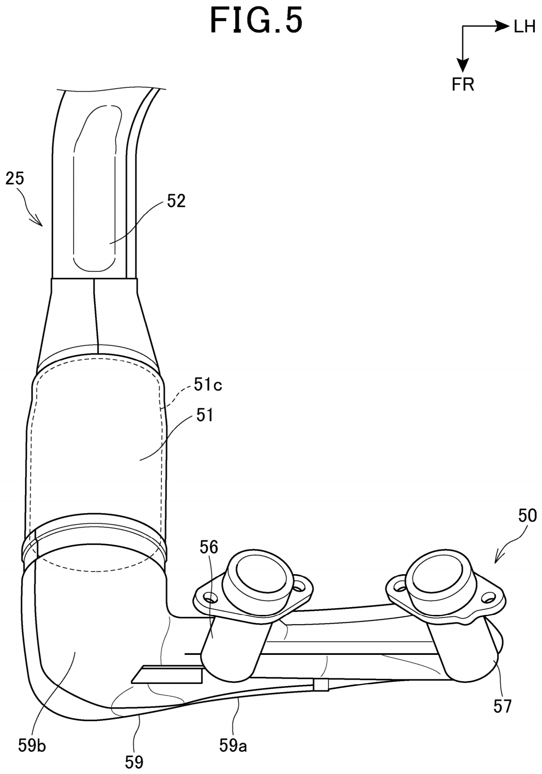

FIG. 2 is a front view of the saddle-ride vehicle 10. FIG. 3 illustrates a part of the exhaust device 25 as viewed from below. FIG. 4 illustrates a part of the exhaust device 25 as viewed from the left. FIG. 5 illustrates a part of the exhaust device 25 as viewed from above.

An exhaust opening 24a of the exhaust port opens obliquely downward so as to face the outside of the vehicle body. That is, in a front view of the vehicle body, the exhaust opening 24a on one side (vehicle body right side) is opened to face downward and leftward, and the exhaust opening 24a on the other side (vehicle body left side) is opened to face downward and rightward.

The upstream exhaust pipe 50 includes a pair of exhaust pipes 56 and 57 extending downward from the exhaust opening 24a of the cylinder unit 24 of the engine 12. Specifically, the pair of exhaust pipes 56 and 57 includes a first exhaust pipe 56 connected to the exhaust opening 24a on one (right side) of the left and right sides of the cylinder unit 24, and a second exhaust pipe 57 connected to the exhaust opening 24a on the other (left side) of the left and right sides.

As illustrated in FIGS. 3 to 5, the second exhaust pipe 57 extends while curving forward and downward from the exhaust opening 24a of the cylinder unit 24, and then extends downward.

The first exhaust pipe 56 includes a downward extending portion 56a and an upstream bent portion 56b.

The downward extending portion 56a extends while being curved forward and downward from the exhaust opening 24a of the cylinder unit 24, and then extends downward. The upstream bent portion 56b is connected to the downstream end of the downward extending portion 56a. The upstream bent portion 56b is gently curved toward the second exhaust pipe 57 (left side) in the vehicle width direction from the downstream end of the downward extending portion 56a, extends leftward and downward, and then is curved in a direction along the second exhaust pipe 57. The upstream bent portion 56b extends toward the second exhaust pipe 57 so as to be aligned with the second exhaust pipe 57 in the vehicle width direction, and is in contact with the second exhaust pipe 57 at the downstream end.

On the downstream side of the upstream bent portion 56b, a downstream bent portion 58 curved in a direction away from the second exhaust pipe 57 in the vehicle width direction (right side) is provided.

A third exhaust pipe 59 is connected to the downstream end of the downstream bent portion 58 and the downstream end of the second exhaust pipe 57.

The third exhaust pipe 59 extends leftward and upward in a front view of the vehicle body as illustrated in FIG. 2, and extends forward and then extends rearward in a side view of the vehicle body as illustrated in FIG. 4. That is, the third exhaust pipe 59 includes a front right extending portion 59a extending forward and rightward at the downstream ends of the downstream bent portion 58 and the second exhaust pipe 57.

The downstream end of the front right extending portion 59a includes a third bent portion 59b that extends in a curved manner toward the front right upper side so as to approach the upstream bent portion 56b and then curves backward and downward in a front view.

The third exhaust pipe 59 includes the front right extending portion 59a and the third bent portion 59b.

The catalytic converter 51 is connected to the downstream end of the third exhaust pipe 59.

The third exhaust pipe 59 is formed in a shape whose cross-sectional area gradually increases toward the downstream side of the flow of the exhaust gas. Since the agitation of the exhaust gas after merging is promoted by the shape of the third exhaust pipe 59, the exhaust gas can be more appropriately brought into contact with the catalyst 51c in the catalytic converter 51, and the purification performance of the exhaust gas by the catalyst 51c can be improved.

A downstream exhaust pipe 52 is connected to the downstream end of the catalytic converter 51. An upstream end portion of the downstream exhaust pipe 52 is increased in diameter toward the upstream end side.

The third exhaust pipe 59 and the upstream bent portion 56b are connected to each other by a connecting portion 60. Specifically, the connecting portion 60 is fixed to the front lower side of the upstream bent portion 56b and the upper side of the third exhaust pipe 59 by welding. As a result, the rigidity of the upstream exhaust pipe 50 can be improved.

Moreover, as described above, since the third exhaust pipe 59 is curved and extends rightward and upward so as to approach the upstream bent portion 56b in a front view of the vehicle body, the connecting portion 60 can be shortened. As a result, the weight of the upstream exhaust pipe 50 can be reduced.

The connecting portion 60 is provided around the catalytic converter 51. Specifically, the connecting portion 60 is provided in the third exhaust pipe 59 connected to the catalytic converter 51. Therefore, the connecting portion 60 transfers the heat of the first exhaust pipe 56 from the third bent portion 59b to the catalytic converter 51. As a result, the temperature of the catalyst 51c in the catalytic converter 51 can be rapidly raised, and the purification performance of the exhaust gas can be improved.

As illustrated in FIG. 2, in the present embodiment, the first exhaust pipe 56 and the downstream bent portion 58 constituting the exhaust path from the exhaust opening 24a on one of the left and right sides (right side) of the cylinder unit 24 to the third exhaust pipe 59 are formed to have substantially the same length as the second exhaust pipe 57 constituting the exhaust path from the exhaust opening 24a on the other of the left and right sides (left side) of the cylinder unit 24 to the third exhaust pipe 59. As a result, the left and right exhaust paths can be aligned, which is advantageous for improving the output performance.

In addition, since the paths from the left and right exhaust paths to the third exhaust pipe 59 include the paths curved to the left and right, the upstream exhaust pipe 50 can be compactly accommodated in the vertical direction in front of the engine 12 as illustrated in FIG. 4. Furthermore, since the volume before the catalyst 51c can be increased, the influence of the exhaust resistance when the exhaust gas enters the catalyst 51c can be reduced, which is advantageous for improving the output performance.

The merging portion 65 where the left and right exhaust paths merge will be described in detail.

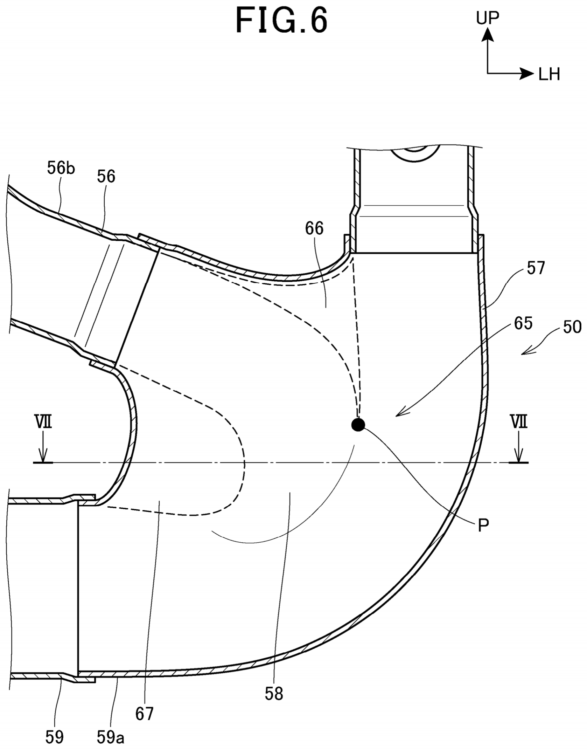

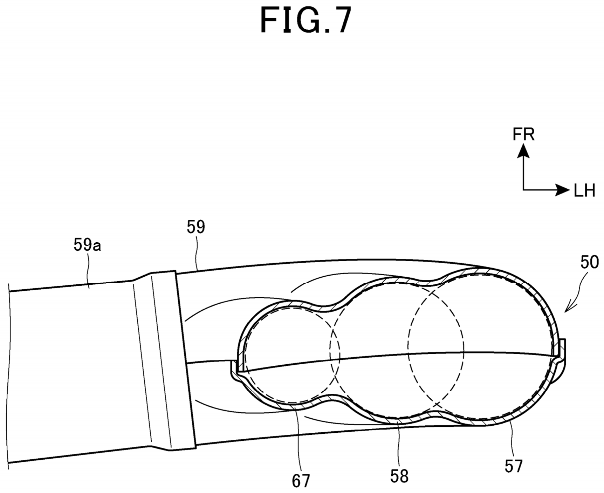

FIG. 6 is a front view of a cross section of the merging portion 65. FIG. 7 is a cross-sectional view taken along line VII-VII in FIG. 6.

The merging portion 65 includes a downstream portion of the upstream bent portion 56b, a downstream portion of the second exhaust pipe 57, the downstream bent portion 58, a first communication portion 66, and a second communication portion 67, which communicate with the adjacent exhaust pipes 56, 57, 58, 66, and 67, respectively. The exhaust gas flowing from the first exhaust pipe 56 and the exhaust gas flowing from the second exhaust pipe 57 flow into the merging portion 65, and they flow to the third exhaust pipe 59.

A reference sign P in FIG. 6 indicates a junction of the downstream bent portion 58 and the second exhaust pipe 57.

The first communication portion 66 allows the upstream bent portion 56b and the second exhaust pipe 57 to communicate with each other above the downstream bent portion 58, thereby allowing the upstream bent portion 56b, the downstream bent portion 58, the second exhaust pipe 57, and the downstream bent portion 58 to communicate with each other at the junction P and the periphery thereof.

The second communication portion 67 allows the upstream bent portion 56b and the third exhaust pipe 59 to communicate with each other on the right side of the downstream bent portion 58, whereby allowing the upstream bent portion 56b, the downstream bent portion 58, and the third exhaust pipe 59 to communicate with each other on the opposite side of the junction P with respect to the downstream bent portion 58.

By providing the first communication portion 66, the curved path from the first exhaust pipe 56 to the junction P can be expanded, the exhaust resistance of the curved path can be reduced, and the flow of the exhaust gas can be made smooth.

In addition, by providing the second communication portion 67, the curved path from the first exhaust pipe 56 to the third exhaust pipe 59 can be further expanded, the exhaust resistance of the curved path can be further reduced, and the flow of the exhaust gas can be made smoother. In addition, by increasing the volume of the merging portion 65, an effect of reducing the flow velocity of the exhaust gas can also be expected.

As illustrated in FIG. 2, the second communication portion 67 is disposed at a center portion in the vehicle width direction, and overlaps a center line L in the vehicle width direction in a front view in the present embodiment. As a result, it is possible to suppress the upstream exhaust pipe 50 from greatly expanding with respect to the left side in the vehicle width direction and to reduce the size and weight of the saddle-ride vehicle 10.

In the merging portion 65, the second exhaust pipe 57, the downstream bent portion 58, and the second communication portion 67 are arranged side by side in the vehicle width direction, and their diameters gradually decrease toward the inside in the vehicle width direction. That is, the diameter of the downstream bent portion 58 is larger than the diameter of the second communication portion 67, and the diameter of the second exhaust pipe 57 is larger than the diameter of the downstream bent portion 58. This makes it easy to balance the left and right between the catalytic converter 51 and the muffler 53 provided downstream of the third exhaust pipe 59.

In addition, the merging portion 65 is formed in a shape in which the diameter of the second exhaust pipe 57, the diameter of the downstream bent portion 58, and the diameter of the second communication portion 67 overlap each other in a cross-sectional view. That is, as illustrated in FIG. 7, when each of the second exhaust pipe 57, the downstream bent portion 58, and the second communication portion 67 is regarded as an exhaust pipe having a circular diameter, the second communication portion 67 and the downstream bent portion 58 partially overlap each other, and the downstream bent portion 58 and the second exhaust pipe 57 partially overlap each other. As a result, the portion including the second exhaust pipe 57, the downstream bent portion 58, and the second communication portion 67 can be formed compactly.

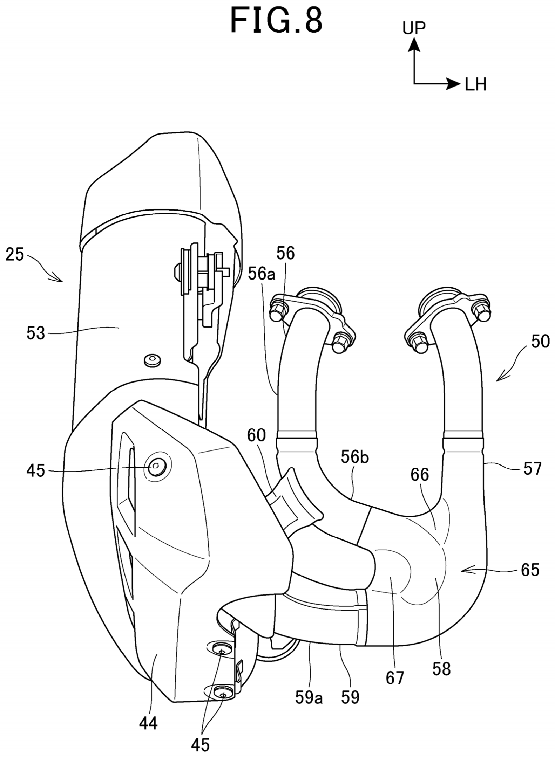

FIG. 8 is a diagram illustrating the exhaust device 25 and an undercover 44.

The undercover 44 is attached to the exhaust device 25. The undercover 44 is a cover that covers the front surface, the lower surface, and the right surface of the exhaust device 25. Specifically, the undercover 44 extends along the catalytic converter 51, and covers the catalytic converter 51 and a part of the connecting portion 60 in a front view of the vehicle body. Although not illustrated, in a bottom view, the lower surface of the catalytic converter 51 is covered, and in a right side view, the right surface of the catalytic converter 51 and the right surface of the downstream exhaust pipe 52 disposed on the downstream side of the catalytic converter 51 are covered.

The undercover 44 is supported by three points, that is, the catalytic converter 51, the third bent portion 59b, and a front portion of the downstream exhaust pipe 52. As illustrated in FIG. 2, substantially protruding stays 55 are provided at a front portion and a rear portion of the lower surface of the catalytic converter 51. The stays 55 are arranged side by side in the extending direction of the catalytic converter 51. The substantially protruding stay 55 is also provided to the third bent portion 59b. Although not illustrated, a fixing portion (not illustrated) is also provided in a front portion of the downstream exhaust pipe 52.

The stay 55 includes a support surface 55a formed along the catalytic converter 51 or the third bent portion 59b, a separation surface 55b extending from an end portion of the support surface 55a in a direction away from the catalytic converter 51 or the third bent portion 59b, and a receiving surface 55c connecting the separation surfaces 55b.

Each of the receiving surface 55c and the fixing portion of each stay 55 has a fastening hole through which a fastening member 45 passes. The fastening member 45 penetrates and is fixed to the fastening hole provided in the undercover 44 and the fastening hole of the stay 55 and the fastening hole of the fixing portion corresponding to the fastening hole of the undercover 44, whereby the undercover 44 is fixed to the exhaust device 25.

Since the receiving surface 55c of the stay 55 is separated from the exhaust device 25, the exhaust device 25 and the undercover 44 are fixed with a space therebetween without being in direct contact with each other. Therefore, the undercover 44 is less likely to receive heat from the exhaust device 25. As a result, the undercover 44 can be made of resin, and the saddle-ride vehicle 10 can be reduced in weight.

By providing the undercover 44 to the exhaust device 25 in this manner, the wind is less likely to directly hit the catalytic converter 51 and the connecting portion 60, and the cooling is less likely to be performed by the traveling wind or the like, so that the heat generated in the first exhaust pipe 56 can be more transferred to the catalyst 51c through the connecting portion 60. In addition, since the catalytic converter 51 is cooled by the traveling wind and the catalyst 51c is not excessively cooled, it is possible to suppress a decrease in the purification performance of the catalyst 51c.

As described above, the saddle-ride vehicle 10 includes a pair of exhaust pipes 56 and 57 extending downward from the engine 12, and the first exhaust pipe 56 that is one of the left and right pipes of the pair of left and right exhaust pipes 56 and 57 includes the upstream bent portion 56b that bends toward the second exhaust pipe 57 that is the other of the left and right pipes. The saddle-ride vehicle 10 also includes the merging portion 65 where the upstream bent portion 56b and the second exhaust pipe 57 merge, on the other side of the left and right sides, and the third exhaust pipe 59 extends from the merging portion 65. The downstream portion of the upstream bent portion 56b merges with the second exhaust pipe 57 in a state of being aligned with the second exhaust pipe 57 in the vehicle width direction and extending downward along the second exhaust pipe 57. The merging portion 65 includes the downstream bent portion 58 that bends toward one of the left and right sides from a connection point between the upstream bent portion 56b and the second exhaust pipe 57, the first communication portion 66 that allows the upstream bent portion 56b and the second exhaust pipe 57 to communicate with each other upstream of the downstream bent portion 58, and the second communication portion 67 that allows the upstream bent portion 56b and the third exhaust pipe 59 to communicate with each other downstream of the downstream bent portion 58 and has a smaller diameter than those of the downstream bent portion 58 and the second exhaust pipe 57.

According to this configuration, since the saddle-ride vehicle 10 has an exhaust pipe structure curved in the left-right direction, the exhaust pipe in front of the engine 12 can be made to have an appropriate length while the entire exhaust pipe is compactly accommodated within the vertical width, and the output can be improved. In addition, the exhaust resistance of the curved path can be reduced by the first communication portion 66 and the second communication portion 67.

Part of the exhaust gas flowing from the first exhaust pipe 56 or the second exhaust pipe 57 to the merging portion 65 flows to the first communication portion 66 and the second communication portion 67, so that the exhaust resistance accompanying the merging of the first exhaust pipe 56 and the second exhaust pipe 57 can be reduced.

In the saddle-ride vehicle 10, three pipe members including the second exhaust pipe 57, the downstream bent portion 58, and the second communication portion 67 are aligned in the vehicle width direction in the merging portion 65, and the pipe sizes of these pipe members gradually decrease toward the center of the vehicle width.

According to this configuration, in the saddle-ride vehicle 10, by arranging the pipe member having a large diameter on the outer side in the vehicle width direction, it is easy to balance the left and right between the catalytic converter 51 and the muffler 53 provided downstream of the third exhaust pipe 59 and the pipe member on the outer side in the vehicle width direction.

The second communication portion 67 is disposed at the center in the vehicle width direction of the saddle-ride vehicle 10.

According to this configuration, the exhaust pipe can be suppressed from greatly expanding in the vehicle width direction, and the exhaust pipe can be reduced in size and weight.

The third exhaust pipe 59 extends so as to approach the upstream bent portion 56b, and includes the connecting portion 60 that connects the third exhaust pipe 59 and the upstream bent portion 56b.

According to this configuration, rigidity of the exhaust pipe is improved by the connecting portion 60, and an increase in weight of the exhaust pipe can be suppressed by shortening the connecting portion 60.

The saddle-ride vehicle 10 includes the catalyst 51c for purifying the exhaust gas passing through the third exhaust pipe 59 around the connecting portion 60.

According to this configuration, the saddle-ride vehicle 10 can transfer the heat of the upstream bent portion 56b from the upstream bent portion 56b to the catalyst 51c via the connecting portion 60, and can quickly raise the temperature of the catalyst 51c. Therefore, the exhaust gas purification performance can be improved.

The third exhaust pipe 59 is curved forward and upward from the merging portion 65 and then curved backward and downward to be connected to the catalytic converter 51 having the catalyst 51c, and the cross-sectional area of the third exhaust pipe 59 gradually increases toward the downstream side.

According to this configuration, in the saddle-ride vehicle 10, the agitation of the exhaust gas is promoted in the third exhaust pipe 59 having the enlarged diameter and the curved shape, and the exhaust gas is easily uniformly brought into contact with the catalyst 51c, so that the exhaust gas can be efficiently purified.

The undercover 44 that covers at least a part of the connecting portion 60 in a front view of the vehicle is provided.

According to this configuration, in the saddle-ride vehicle 10, since the heat of the exhaust pipe can be transferred to the exhaust pipe in front of the catalyst 51c by the connecting portion 60, the purification function of the catalyst 51c can be improved.

### [Other Embodiments]

The embodiment described above is merely an aspect of the present invention, and can be arbitrarily modified and applied within a scope not departing from the spirit of the present invention.

For example, in the above-described embodiment, an example in which the first exhaust pipe 56 is provided on the right side and the second exhaust pipe 57 is provided on the left side has been described. However, the first exhaust pipe may be provided on the left side, and the second exhaust pipe may be provided on the right side.

### [Configurations supported by above embodiments]

The above embodiments support configurations below.

(Configuration 1) A saddle-ride vehicle comprising: a pair of exhaust pipes extending downward from an engine, the pair of exhaust pipes including a first exhaust pipe on one of left and right sides and a second exhaust pipe on another of the left and right sides, the first exhaust pipe including an upstream bent portion that bends toward the second exhaust pipe; a merging portion in which the upstream bent portion and the second exhaust pipe merge, the merging portion being provided on the other of the left and right sides; and a third exhaust pipe extending from the merging portion, wherein a downstream portion of the upstream bent portion merges with the second exhaust pipe in a state of being aligned with the second exhaust pipe in a vehicle width direction and extending downward along the second exhaust pipe, and the merging portion includes: a downstream bent portion that bends toward one of the left and right sides from a connection point between the upstream bent portion and the second exhaust pipe; a first communication portion that allows the upstream bent portion and the second exhaust pipe to communicate with each other upstream of the downstream bent portion; and a second communication portion that allows the upstream bent portion and the third exhaust pipe to communicate with each other downstream of the downstream bent portion, and has a smaller diameter than diameters of the downstream bent portion and the second exhaust pipe.

According to this configuration, since the saddle-ride vehicle has an exhaust pipe structure curved in the left-right direction, the exhaust pipe in front of the engine can be made to have an appropriate length while the entire exhaust pipe is compactly accommodated within the vertical width, and the output can be improved. In addition, the exhaust resistance of the curved path can be reduced by the first communication portion and the second communication portion.

Part of the exhaust gas flowing from the first exhaust pipe or the second exhaust pipe to the merging portion flows to the first communication portion and the second communication portion, so that the exhaust resistance accompanying the merging of the first exhaust pipe and the second exhaust pipe can be reduced.

(Configuration 2) The saddle-ride vehicle according to configuration 1, wherein three pipe members including the second exhaust pipe, the downstream bent portion, and the second communication portion are aligned in the vehicle width direction in the merging portion, and the pipe sizes of the three pipe members gradually decrease toward a center of a vehicle width.

According to this configuration, in the saddle-ride vehicle, by arranging the pipe member having a large diameter on the outer side in the vehicle width direction, it is easy to balance the left and right between the catalyst converter and the muffler provided downstream of the third exhaust pipe and the pipe member on the outer side in the vehicle width direction.

(Configuration 3) The saddle-ride vehicle according to configuration 1 or 2, wherein the second communication portion is disposed at a center in the vehicle width direction.

According to this configuration, in the saddle-ride vehicle, the exhaust pipe can be suppressed from greatly expanding in the vehicle width direction, and the exhaust pipe can be reduced in size and weight.

(Configuration 4) The saddle-ride vehicle according to any one of configurations 1 to 3, wherein the third exhaust pipe extends so as to approach the upstream bent portion, and the saddle-ride vehicle further comprises a connecting portion that connects the third exhaust pipe and the upstream bent portion to each other.

According to this configuration, rigidity of the exhaust pipe is improved by the connecting portion, and an increase in weight of the exhaust pipe can be suppressed by shortening the connecting portion.

(Configuration 5) The saddle-ride vehicle according to configuration 4, wherein a catalyst for purifying exhaust gas passing through the third exhaust pipe is provided around the connecting portion.

According to this configuration, the saddle-ride vehicle can transfer the heat of the upstream bent portion from the upstream bent portion to the catalyst via the connecting portion, so that the catalyst purification function can be improved.

(Configuration 6) The saddle-ride vehicle according to any one of configurations 1 to 5, wherein the third exhaust pipe is curved forward and upward from the merging portion, and then curved backward and downward to be connected to a catalytic converter having a catalyst, and a cross-sectional area of the third exhaust pipe gradually increases toward a downstream side.

According to this configuration, in the saddle-ride vehicle, the agitation of the exhaust gas is promoted in the third exhaust pipe having the enlarged diameter and the curved shape, and the exhaust gas is easily uniformly brought into contact with the catalyst, so that the exhaust gas can be efficiently purified.

(Configuration 7) The saddle-ride vehicle according to configuration 4 or 5, further comprising a cover that covers at least a part of the connecting portion in a front view of the saddle-ride vehicle.

According to this configuration, in the saddle-ride vehicle, since the heat of the exhaust pipe can be transferred to the exhaust pipe in front of the catalyst by the connecting portion, the catalyst purification function can be improved.

### REFERENCE SIGNS LIST

- 12: engine (power unit)
- 44: undercover (cover)
- 51: catalyst converter
- 51c: catalyst
- 56: first exhaust pipe (pair of exhaust pipes, exhaust pipe)
- 56b: upstream bent portion
- 57: second exhaust pipe (pair of exhaust pipes, exhaust pipe)
- 58: downstream bent portion (exhaust pipe)
- 59: third exhaust pipe (exhaust pipe)
- 60: connecting portion
- 65: merging portion
- 66: first communication portion (exhaust pipe)
- 67: second communication portion (exhaust pipe)

## Claims

1. A saddle-ride vehicle (10) comprising: a pair of exhaust pipes (56, 57) extending downward from an engine (12), the pair of exhaust pipes (56, 57) including a first exhaust pipe (56) on one of left and right sides and a second exhaust pipe (57) on another of the left and right sides, the first exhaust pipe (56) including an upstream bent portion (56b) that bends toward the second exhaust pipe (57); a merging portion (65) in which the upstream bent portion (56b) and the second exhaust pipe (57) merge, the merging portion (65) being provided on the other of the left and right sides; and a third exhaust pipe (59) extending from the merging portion (65), **characterized in that**
a downstream portion of the upstream bent portion (56b) merges with the second exhaust pipe (57) in a state of being aligned with the second exhaust pipe (57) in a vehicle width direction and extending downward along the second exhaust pipe (57), and
the merging portion (65) includes:
a downstream bent portion (58) that bends toward one of the left and right sides from a connection point between the upstream bent portion (56b) and the second exhaust pipe (57);
a first communication portion (66) that allows the upstream bent portion (56b) and the second exhaust pipe (57) to communicate with each other upstream of the downstream bent portion (58); and
a second communication portion (67) that allows the upstream bent portion (56b) and the third exhaust pipe (59) to communicate with each other downstream of the downstream bent portion (58), and has a smaller diameter than diameters of the downstream bent portion (58) and the second exhaust pipe (57).

2. The saddle-ride vehicle according to claim 1, wherein
three pipe members including the second exhaust pipe (57), the downstream bent portion (58), and the second communication portion (67) are aligned in the vehicle width direction in the merging portion (65), and the pipe sizes of the three pipe members gradually decrease toward a center of a vehicle width.

3. The saddle-ride vehicle according to claim 1 or 2, wherein
the second communication portion (67) is disposed at a center in the vehicle width direction.

4. The saddle-ride vehicle according to claim 1, 2 or 3, wherein
the third exhaust pipe (59) extends so as to approach the upstream bent portion (56b), and
the saddle-ride vehicle further comprises a connecting portion (60) that connects the third exhaust pipe (59) and the upstream bent portion (56b) to each other.

5. The saddle-ride vehicle according to claim 4, wherein
a catalyst (51c) for purifying exhaust gas passing through the third exhaust pipe (59) is provided around the connecting portion (60).

6. The saddle-ride vehicle according to any preceding claim, wherein
the third exhaust pipe (59) is curved forward and upward from the merging portion (65), and then curved backward and downward to be connected to a catalytic converter (51) having a catalyst (51c), and
a cross-sectional area of the third exhaust pipe (59) gradually increases toward a downstream side.

7. The saddle-ride vehicle according to claim 4 or 5, or according to claim 6 when dependent on claim 4 or 5, further comprising
a cover (44) that covers at least a part of the connecting portion (60) in a front view of the saddle-ride vehicle.
